# EUROPEAN PATENT APPLICATION

(11) **EP 0 777 063 A1**
(43) Date of publication of application: **04.06.1997**
(21) Application number: 96918695.6
(22) Date of filing: 13.06.1996
(51) Int. Cl.: F16D 66/00, B60T 17/22

(54) **DEVICE FOR CONTROLLING THE TEMPERATURE OF THE BRAKES, APPLICABLE TO HEAVY VEHICLES**

(30) Priority: 15.06.1995 ES 9501650 U
(71) Applicant: Mellado Tomas, Ismael, 30002 Murcia (ES); Mellado Perez, Antonio, 30002 Murcia (ES)
(72) Inventor: Mellado Tomas, Ismael, 30002 Murcia (ES); Mellado Perez, Antonio, 30002 Murcia (ES)
(74) Representative: Lahidalga de Careaga, Jose Luis
(86) International application number: ES9600131
(87) International publication number: WO9700388

(57) **Abstract**

Device for controlling the temperature of the brakes, applicable to heavy vehicles, of the type intended to provide the driver of the vehicle with information related to the friction temperature and global temperature of each of the brake assemblies of the vehicle, and characterized in that it is comprised of at least two temperature sensors connected to a data display unit situated in the dashboard of the vehicle, wherein are also incorporated warning and danger lamps as a function of the temperature.

## Description

### OBJECT OF THE INVENTION

The present specification refers to an application regarding a utility model relative to a brake temperature control device for heavy vehicles, the evident purpose of which lies in accurately determining the temperature of the brakes of heavy vehicles, thus preventing a rise in the temperature that would result in the brakes overheating and, consequently, preventing accidents, fires and failures from occurring in the brakes.

### FIELD OF THE INVENTION

The application of this invention falls within the vehicle manufacturing industry, especially heavy vehicles, and particularly within the industry given over to the manufacture of temperature control devices for brakes built into vehicles.

### BACKGROUND TO THE INVENTION

As is well known, heavy tonnage vehicles, such as the lorries that are used for transporting all types of goods, travel by different routes which may include stretches with steep slopes, such as mountain passes, and the lorry drivers are forced to make repeated use of their brakes, an action that can raise the temperature in the brake assemblies installed in the wheels.

If the stretch along which the lorry is being driven is a long, steep slope, the temperature of the brakes can rise substantially and reach significantly dangerous levels. At the same time, as a result of this action the vehicle 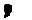 s braking power may drop, and sometimes even be annulled or reduced to zero. This effect is known by the name of fading, and occurs as a result of the crystallization of the brake linings. At the same time, there is a very high risk that the brake assemblies will catch fire, due to the very large amount of heat accumulated when the driver uses the brakes.

It should be pointed out that vehicles transporting highly inflammable merchandise are strictly prohibited from using electronic brakes, and this increases the risk of an accident arising from the aforementioned circumstances, such as when the vehicle is being driven down a mountain pass with very steep slopes.

Apart from what has already been mentioned, it should be taken into account that a vehicle wears out the friction material or brake lining, and if the brake drum in also worn out, the lever that operates the brake shoes jumps or goes too far, and does not go back to its original position, and as a result the brake shoes do not go back to their original position either, and continue to rub against the drum, without the driver being able to realize the situation that is generated by having a partially braked wheel. This circumstance slowly raises the temperature of the wheel until it overheats and catches fire.

The friction material or brake lining becomes detached from the brake shoe and forms a mass inside the brake drum, rubbing against it, without the driver realizing. Consequently the wheel becomes hotter and eventually catches fire.

The wheel journal bearing stiffens or breaks, and the driver of the vehicle is unable to notice the situation, and continues driving, and as a result of this action the wheel assembly heats up and then burns.

When a drum heats up, and consequently then catches fire, the fire cannot be put out because it has been caused by overheating, and after all the fire extinguishers installed in the vehicle have been used, the flame regenerates combustion, and the fire cannot be put out until the metal cools down, an appropriate temperature is reached and consequently the cooling makes it possible to put out the fire.

At present, in all the aforementioned circumstances the drivers of heavy vehicles run the compulsory risk of continuously looking in their rear-view mirrors to see if a column of smoke is coming from any of the wheels where, as a result of a malfunction or overuse of the brakes, the event that has generated the fire may have occurred, but this indirect visualization of the areas of the vehicle where the fire may occur is very often inviable, either because the lorry is being driven in poor weather conditions with limited visibility, or at night time.

The evident solution to the problems that currently arise in this field would be to have a device that allows the driver of the vehicle to keep direct control of the temperature of the brakes; and if the temperature were to rise, without allowing the potential fire to start, the device would let the driver stop the vehicle until the temperature of the brakes has dropped enough to allow the driver to continue driving, without the possibility of any anomaly occurring.

Nonetheless, until now and as far as is known, no device has been invented that has such ideal characteristics.

### DESCRIPTION OF THE INVENTION

The brake temperature control device for heavy vehicles described herein is in itself an evident breakthrough in the field of application of the device, because when this device is installed in heavy vehicles which, as is known, are liable to catch fire and lose their braking efficiency if their brakes overheat, the driver of the vehicle can directly and constantly monitor the temperature of the brakes.

More specifically, the brake temperature control device for heavy vehicles that forms the object of this invention is designed in such a way that it allows the driver to maintain direct visualization of the friction temperature and of the overall temperature, independently.

In synthesis, the device is equipped with two temperature sensors for each brake assembly.

The first sensor supplies the friction temperature information whereas the second sensor supplies the overall temperature information.

Since the action of the brakes act first upon the brakes of the last axle of the vehicle, only the last axle will be equipped with friction sensors.

In articulated vehicles, the differential gear will also be equipped with friction sensors, in other words, if the articulated vehicle consists of 10 brake assemblies, consequently 10 overall temperature sensors and 4 friction temperature sensors will be installed.

The information on the two temperatures, in other words, the friction and overall temperatures, can be read by laser beam, infrared rays or a photoelectric cell.

The first sensor is located inside the brake assembly, attached by an adapter to the brake shoe clamp bolt or dust guard, as close as possible to the friction surface inside the brake drum, separated by a minimum margin to avoid it rubbing against the friction surface, and in direct contact with the air given off by the friction per se, taking advantage of the rotational force of the brake drum.

If the friction temperature information is read by infrared rays, a photoelectric cell or a laser beam, the latter devices will he located in the outer part of the dust guard, and the beam of light will read the temperature of the air given off by the friction at the point located right at the end of the brake lining where part of the brake drum friction surface stops rubbing against one brake lining and then starts rubbing against the next brake lining.

The second sensor will be located inside the brake assembly, screwed to the stiffener or rib of one of the brake shoes, and in direct contact with the inner face of the brake shoe itself.

If the overall temperature information is read by infrared rays, a photoelectric cell or a laser beam, the beam of light will read the temperature of the brake shoe or brake drum.

The temperature signals will be transmitted via leads installed with the vehicle 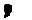 s wiring.

In articulated vehicles, the leads will pass from the trailer to the tracttor unit via a connecting lead, just like the vehicle 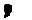 s wiring.

These leads will be connected to the data panel which will be attached to the vehicle dashboard, where it can be seen by the driver and located in such a way that it does not obstruct external visibility or prevent conventional manoeuvring of the vehicle.

The data panel is equipped with the following functions:
- It will graphically display the friction temperature on a rising scale showing the level of danger of the fading effect.
- It will display the overall temperature in digits expressed in degrees centigrade.

The number of displays on the data panel can be reduced to one, to give the temperature information of the brakes of each axle, with a manual selector being used to select the axle.

The data panel will incorporate two temperature memory functions, the first of which will be programmed in accordance with the types of materials used to construct the brake assemblies, and in accordance with their dimensions.

The driver of the vehicle will not have access the memory programming, and the memory will have a function that switches on up a warning light on the data panel when the overall or temperature or friction temperature reaches a dangerous value.

The first memory will also have a function that sounds a buzzer to warn of the inherent danger existing in the installation when the overall temperature or friction temperature reaches a dangerous or inadmissible value, warning the driver at the same time as the warning light of the risk of a loss of braking efficiency, and consequently of the risk of fire. If the driver of the vehicle wishes, he can determine whether he should stop the vehicle and wait for the brakes to cool down, or else continue driving while taking with the appropriate precautions.

Obviously, when the temperatures drop to given safely values, the buzzer and warning light will cease to operate.

The second memory installed in the device is used to memorize the values of the maximum temperatures reached during the last journey of the vehicle, which will be displayed in the digits and on the rising scales when the memory button is pressed.

Thus the driver can, after stopping the vehicle of course, carefully study and see which brake assembly is heating up most or least and, consequently, take whatever measures he deems most appropriate.

The more equal the temperatures are to each other, the more evenly the vehicle will brake, bearing in mind that articulated vehicles must always brake less at the front end and more at the rear end, in order to avoid the "scissor" effect.

The data panel has this second memory because the driver cannot allow himself to be distracted while he is driving, and even so will notice a significant difference in temperature by just quickly glancing at the panel.

This second memory can also be used to allow the traffic authorities of wherever the vehicle is being driven to ensure that the driver of the vehicle is keeping within the danger and inadmissible temperature values.

This second memory will disappear from the data panel when the memory button is pressed, and the panel will display the real temperatures inside the brake assemblies.

The maximum temperatures will only disappear from this second memory when the vehicle has remained still for more than half an hour. The data panel will also be equipped with a light intensity selector to avoid it from dazzling the driver in the dark.

The brake temperature control device for heavy vehicles that has been described will come into operation when the vehicle engine is started up, together with the other elements installed in the vehicle and, before the driver moves off, and if the vehicle has remained still for a substantially long time, now will the time to check that the device works properly, checking that all the brake assemblies give the same temperature reading, in other words, the temperature absorbed by these assemblies from the ambient temperature.

### DESCRIPTION OF THE DRAWINGS

A set of drawings have been enclosed with this descriptive report, of which they form an integral part, in order to supplement this description and make it easier to understand the characteristics of the invention. These drawings, which are provided for the purposes of illustration and are by no means of a limiting nature, show the following:

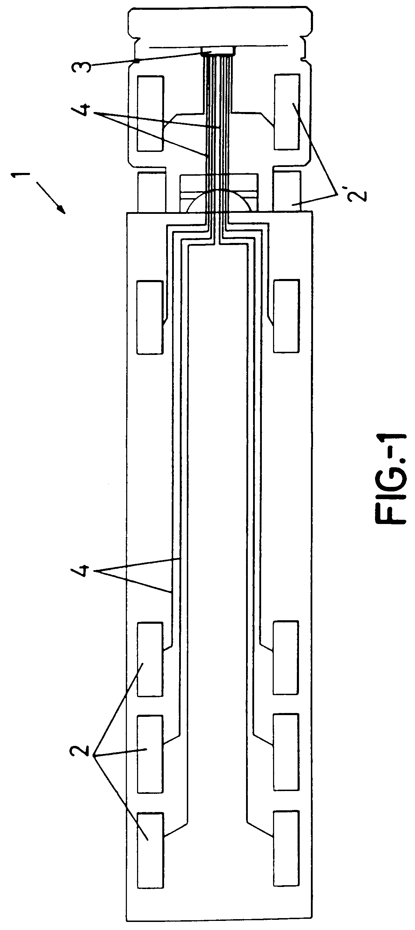

Figure 1 is a schematic illustration of a heavy vehicle seen from the underside, that has been equipped with an installation that continuously communicates the data obtained from the brake assemblies or drums, sending the data back to a panel installed on the dashboard. All these elements together form the brake temperature control device for heavy vehicles that forms the object of this invention.

### PREFERABLE EMBODIMENT OF THE INVENTION

In view of these figures, it can be seen that the brake temperature control device for heavy vehicles is formed by the installation in a heavy vehicle (1), which may or may not be articulated, of a set of leads (4), all connected to a central unit (3), which accurately connect this central unit (3) to each of the brake assemblies installed in the wheels (2) or (2') of a heavy vehicle, allowing the data obtained to be conveyed via the leads (4) to a control panel located on the dashboard of the vehicle carrying the installation formed by the brake temperature control device.

Consequently, if any of the wheels (2) or (2') equipped with brake drums or assemblies starts to overheat, this excess temperature is automatically transmitted to the device (3), which immediately starts up the display panel installed in the driver 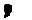 s cab and, consequently, as a result of the visualized indications, with optical and acoustic alarms, the driver can take the appropriate action to ensure correct manoeuvrability of the vehicle, avoiding all the problems that may arise if the temperatures obtained are exceeded.

A fuller description is not given because it is understood that any expert in this field will have enough information to understand the scope of the invention and the advantages derived therefrom.

The materials, shape, size and layout of the parts are liable to change as long as no change is made to the essential nature of the invention.

The terms used in the description and the sense thereof should always be considered to be of a broad, non limiting nature.

## Claims

1. Brake temperature control device for heavy vehicles, of the type use to give the driver clear, immediate, constant information, in a separate manner, about the friction temperature and global temperature of each of the brake assemblies installed in the vehicle, characterised in that it is equipped with two temperature sensors for each brake assembly installed in the vehicle. The sensors may be replaced by infrared rays, photoelectric cells or a laser beam, and the first sensor being used to read the overall friction temperature inside the brake assembly, while the second sensor will read the global temperature inside the brake assembly, both sensors being connected to a data panel that will be located on the vehicle 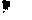 s dashboard, which will have supply the driver with reliable information on the friction temperature of each of the brake assemblies installed in the vehicle, which will be displayed on a scale showing the level of danger, and also informing the driver of the overall temperature of each of the brake assemblies displayed in digits expressed in degrees centigrade. The data panel will also have two temperature memory functions, one of which will be used to light up a warning LED on the panel when the overall temperature or the friction temperature reaches a pre-set value, triggering at the same time a buzzer, while the second memory is used to memorise the values of the maximum friction and overall temperatures reached during the vehicle 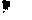 s last journey, which will be displayed in digits and on rising scales, when the memory button is pressed.

2. Brake temperature control device for heavy vehicles, as per the first claim, characterised in that the first sensor will be located in an area close to the friction surface inside the brake drum, separated by a minimum margin to avoid it rubbing against the friction surface, and which is in direct contact with the air given off by the friction.

3. Brake temperature control device for heavy vehicles, as per the previous claims, characterised in that the second sensor is screwed to the stiffener or rib of one of the brake shoes, and in direct contact with the inner face of the brake shoe.

4. Brake temperature control device for heavy vehicles, as per the previous claims, characterised in that the sensors can be replaced by infrared rays, a photoelectric cell or a laser beam.

5. Brake temperature control device for heavy vehicles, as per the previous claims, characterised in that when the friction temperature information is emitted by a photoelectric cell, infrared rays or laser, the beam of light will read the temperature of the air that is given off by the friction, at the end of the brake lining where part of the brake drum friction surface stops rubbing against one brake lining and then starts rubbing against the next brake lining.

6. Brake temperature control device for heavy vehicles, as per the previous claims, characterised in that when the global temperature information is emitted by a photoelectric cell, infrared rays or laser beam, the beam of light will read the temperature of one of the two brake shoes or the temperature of the brake drum.

7. Brake temperature control device for heavy vehicles, as per the previous claims, characterised in that in some brake assemblies the number of temperature sensors may be reduced to one.

8. Brake temperature control device for heavy vehicles, as per the previous claims, characterised in that the number of displays on the data panel can be reduced to one, to give the temperature information of the brakes of each axle.
